# EUROPÄISCHE PATENTANMELDUNG

(11) **EP 1 595 828 A2**
(43) Veröffentlichungstag der Anmeldung: **16.11.2005**
(21) Anmeldenummer: 05002456.1
(22) Anmeldetag: 05.02.2005
(51) Int. Cl.: B65G 47/91

(54) **Vorrichtung zum Übergeben von Packungen**

(30) Priorität: 14.05.2004 DE 102004024155
(71) Anmelder: UHLMANN PAC-SYSTEME GmbH & Co. KG, 88471 Laupheim (DE)
(72) Erfinder: Knüppel, Jörg, 88477 Schwendi (DE); Rodi, Wolfgang, 88471 Baustetten (DE); Gertitschke, Detlev, Dipl.-Ing., 88471 Laupheim (DE)
(74) Vertreter: Hentrich, Swen

(57) **Zusammenfassung**

Die Erfindung betrifft eine Vorrichtung zum Übergeben von Packungen (2), mit einem die Packungen (2) von einer Zuführung (3) ergreifenden und an eine Fördereinrichtung (4) übergebenden Greifelement (7), wobei mittels einer Antriebseinrichtung (12) eine Antriebsscheibe drehend antreibbar ist, in der dezentral eine Antriebswelle drehbar gelagert ist, auf der mit einem ersten Hebelarm (15) ein Kniehebel (16) drehfest angeordnet ist. Die Kniehebel weist einen über ein Kniegelenk (17) mit dem ersten Hebelarm (15) verbundenen zweiten Hebelarm (18) auf, an dessen freien Ende eine Greiferwelle (19) drehbar gelagert ist, die das Greifelement (7) trägt. Es sind Mittel vorgesehen zur Steuerung des von dem ersten Hebelarm (15) und dem zweiten Hebelarm (18) eingeschlossenen Öffnungswinkels sowie Mittel zur Steuerung der Drehlage des Greifelements (7) relativ zum Kniehebel (16).

## Beschreibung

Die Erfindung betrifft eine Vorrichtung zum Übergeben von Packungen, mit einem die Packungen von einer Zuführung ergreifenden und an eine Fördereinrichtung übergebenden Greifelement.

An derartige auch als Übergabesysteme bekannte Vorrichtungen werden in der Praxis hohe Anforderungen gestellt, da diese beispielsweise als Schnittstelle zwischen Thermoformmaschinen und Kartonierer bei Verpackungsmaschinen, insbesondere in der Pharmaindustrie eingesetzt werden und zu unterschiedlichen Aufstellvarianten und unterschiedlichen Ein- und Auslaufhöhen der Packungen kompatibel sein müssen. Bei einer derzeit bekannten Vorrichtung werden die Packungen von einem Absenker auf einem Transportband abgelegt und sodann von unten einem Saugband zugeführt. Bei dieser Übergabe wird die Packung mehrmals losgelassen, also ohne definierte und kontrollierte Führung von der Zuführung zur Fördereinrichtung transportiert, so daß Störquellen, die einen reibungslosen Produktionsbetrieb behindern, gegeben sind.

Der Erfindung liegt daher die Aufgabe zugrunde, eine Vorrichtung der eingangs genannten Art so auszubilden, daß bei Gewährleistung einer großen Variabilität auch unter Berücksichtigung von Formatwechseln der Packungen eine kontrollierte Übergabe der Packungen von der Zuführung an die Fördereinrichtung gewährleistet ist.

Diese Aufgabe wird bei einer Vorrichtung der eingangs genannten Art dadurch gelöst, daß mittels einer Antriebseinrichtung eine Antriebsscheibe drehend antreibbar ist, in der dezentral eine Antriebswelle drehbar gelagert ist, auf der mit einem ersten Hebelarm ein Kniehebel drehfest angeordnet ist, der einen über ein Kniegelenk mit dem ersten Hebelarm verbundenen zweiten Hebelarm aufweist, an dessen freien Ende eine Greiferwelle drehbar gelagert ist, die das Greifelement trägt, und daß Mittel vorgesehen sind zur Steuerung des von dem ersten Hebelarm und dem zweiten Hebelarm eingeschlossenen Öffnungswinkels sowie Mittel zur Steuerung der Drehlage des Greifelements relativ zum Kniehebel.

Mit dieser Vorrichtung ist der Vorteil verbunden, daß die Packung durch das Greifelement auf der Zuführung ergriffen und unmittelbar ohne einen weiteren Wechsel des Transportmittels für die Packung an die Fördereinrichtung übergeben werden kann, wobei über die Mittel zur Steuerung des Öffnungswinkels die einfache Möglichkeit der Synchronisierung mit der Zuführung bei dem Ergreifen der Packung sowie mit der Fördereinrichtung bei dem Abgeben der Packung gegeben ist, da über die Mittel zur Steuerung des Öffnungswinkels die Lage der beiden Hebelarme relativ zueinander beeinflusst wird und somit die Möglichkeit besteht, neben der Höhenlage des Greifelementes auch dessen Bewegung in der Förderrichtung der Zuführung und der Fördereinrichtung durch gezielte Manipulation der Strecklage der beiden Hebelarme zu beeinflussen. Durch die Mittel zur Steuerung der Drehlage des Greifelementes ist dabei sichergestellt, daß das Greifelement bei dem Umlauf der Antriebswelle mit der Antriebsscheibe stets die Drehlage aufweist, die erforderlich ist, um die Packung ergreifen und an die Fördereinrichtung abgeben zu können.

Im Rahmen der Erfindung ganz besonders bevorzugt ist es, wenn die Mittel zur Steuerung des Öffnungswinkels eine erste Kurvenscheibe mit einer ersten Steuerkurve aufweisen, an der eine der Gelenkwelle des Kniegelenks zugeordnete erste Kurvenrolle abläuft. Durch diese Gestaltung ist mittels eines Formschlusses eine sehr hohe Betriebssicherheit gewährleistet, wobei durch die Gestaltung der ersten Steuerkurve auch bei kleinen Drehwinkeln der Antriebsscheibe eine große Änderung des Öffnungswinkels und daraus resultierend eine große Änderung der Lage der beiden Hebelarme erreichbar ist.

Als zweckmäßig hat es sich dabei erwiesen, wenn der zweite Hebelarm drehfest mit der Gelenkwelle verbunden ist, so daß eine durch die erste Kurvenrolle und die erste Steuerkurve erzwungene Verdrehung der Gelenkwelle das Verschwenken des zweiten Hebelarmes bewirkt.

Eine weitere bevorzugte Ausführungsform der Erfindung ist dadurch gekennzeichnet, daß die Mittel zur Steuerung des Öffnungswinkels eine zweite Kurvenscheibe mit einer zweiten Steuerkurve aufweisen, an der eine der Antriebswelle zugeordnete zweite Kurvenrolle abläuft. Durch diese Ausführungsform ist der Vorteil gegeben, daß bei einem gegebenen Drehwinkel der Antriebsscheibe eine noch größere Änderung des Öffnungswinkels erreicht werden kann, da nicht lediglich die Lage des zweiten Hebelarmes gezielt verändert wird, sondern die Möglichkeit besteht, auch gezielt die Antriebswelle zu verdrehen, auf der drehfest der erste Hebelarm angeordnet ist. Man hat damit zwei Parameter zur Verfügung, um den Öffnungswinkel der beiden Hebelarme des Kniehebels zu variieren und die relative Lage des ersten Hebelarmes zum zweiten Hebelarm zu beeinflussen.

Um eine gute Führung der zweiten Kurvenrolle an der zweiten Steuerkurve auch bei schnellen Lageänderungen zu erzielen, ist die Gestaltung nach der Erfindung so getroffen, daß die zweite Steuerkurve als auf der zweiten Kurvenscheibe angeordnete Kurvenleiste gebildet ist, daß die zweite Kurvenrolle zweifach vorgesehen ist, und daß die beiden zweiten Kurvenrollen an den beiden Seitenflächen der Kurvenleiste ablaufen. Um eine kompakte Bauform der erfindungsgemäßen Vorrichtung zu erreichen, sind die erste Kurvenscheibe und die zweite Kurvenscheibe auf gegenüberliegenden Seiten der Antriebsscheiben angeordnet, wozu dann die Antriebswelle die Antriebsscheibe durchgreift und auf der dem Greifelement abgewandten Seite die zweite Kurvenrolle trägt.

Im Rahmen der Erfindung ist weiterhin vorgesehen, daß die Mittel zur Steuerung der Drehlage eine koaxial zur Antriebsscheibe angeordnete starre Achse aufweisen, und daß auf der Antriebswelle, der Gelenkwelle und der Greiferwelle drehbar Steuerrollen gelagert sind, die über Antriebsriemen miteinander und mit der starren Achse gekoppelt sind. Bei dieser Ausführungsform wird aus der Drehung der Antriebsscheibe auch die erforderliche Drehung des Greifelementes abgeleitet, so daß sich diese Ausführungsform durch ihren einfachen konstruktiven Aufbau auszeichnet, mit der erreicht werden kann, daß das Greifelement stets senkrecht nach unten weist, unabhängig von der Drehlage der Antriebsscheibe und der Winkelstellung der beiden Hebelarme des Kniehebels.

Um ein sicheres Ergreifen der Packung zu gewährleisten, ist nach der Erfindung die Gestaltung so getroffen, daß das Greifelement als Sauggreifer mit einem Sauger gestaltet ist, wobei eine weitere Erhöhung der Betriebssicherheit dadurch erreicht wird, daß der Sauger mehrfach vorgesehen und als Saugerkamm gestaltet ist. Dann bietet es sich an, daß die Fördereinrichtung als Saugförderer ausgeführt ist mit mehreren mit gegenseitigem Abstand angeordneten Saugbändern, zwischen denen hindurch der Saugerkamm geführt werden kann, so daß eine fehlerfreie Übergabe der Packung von der Zuführung an die Fördereinrichtung sichergestellt ist.

Die Leistung der erfindungsgemäßen Vorrichtung wird in einfacher Weise dadurch gesteigert, daß die Antriebswelle mit dem Kniehebel und der Greiferwelle mehrfach, gleichmäßig über den Umfang der Antriebsscheibe verteilt, vorgesehen ist.

Dem sicheren Betrieb sowie einer variablen Betriebsweise dient auch, daß die Antriebseinrichtung einen geregelten Servoantrieb aufweist.

Die Einsatzmöglichkeit der erfindungsgemäßen Vorrichtung ist nicht darauf beschränkt, daß schon Packungen vereinzelt und isoliert mit der Zuführung herantransportiert werden, vielmehr ist die Vorrichtung aufgrund ihrer Konstruktion dazu prädestiniert, auch eingesetzt zu werden, wenn die Zuführung eine Stanze zum Ausstanzen der Packungen aus einem laufenden Band aufweist und das Greifelement zum Ergreifen der Packung während des Stanzvorganges synchronisiert ist. Durch die erfindungsgemäße Vorrichtung bietet sich nämlich die Möglichkeit, daß die erste Steuerkurve und die zweite Steuerkurve so gestaltet sind, daß das Greifelement nach dem Ergreifen der Packung und deren Ausstanzung mittels der Stanze eine im wesentlichen senkrecht zur Stanze erfolgende Hubbewegung ausführt, so daß eine störende Interaktion zwischen der ausgestanzten Packung und der Stanze nicht erfolgt. Günstig ist es dabei weiterhin, wenn die erste Steuerkurve und die zweite Steuerkurve so gestaltet sind, daß die Packung nach dem mit der Zuführung synchronisierten Ergreifen mit der Fördereinrichtung synchronisiert und an diese abgegeben wird.

Aufgrund des geregelten Servoantriebs ist es auch in einfacher Weise möglich, daß die Winkelgeschwindigkeit der Antriebsscheibe innerhalb eines Stanz- und Übergabetaktes zur Anpassung an die Ausdehnung der Packung in Förderrichtung veränderbar ist.

Im folgenden wird die Erfindung an einem in der Zeichnung dargestellten Ausführungsbeispiel näher erläutert, es zeigen:
- Fig. 1: eine perspektivische Darstellung der erfindungsgemäßen Vorrichtung,
- Fig. 2: eine zur Steigerung der Übersichtlichkeit beschränkte Darstellung eines Teils der erindungsgemäßen Vorrichtung mit dem Antrieb, der Antriebsscheibe, der Antriebswelle sowie dem Kniehebel und dem Greiferelement, dargestellt ohne die erste Kurvenscheibe und die zweite Kurvenscheibe und ohne die Zuführung und die Fördereinrichtung,
- Fig. 3: eine Seitenansicht der Vorrichtung aus Fig. 1, wobei zur Verbesserung der Übersichtlichkeit lediglich zwei Kniehebel mit zwei Greifelementen dargestellt sind und die erste Kurvenscheibe die Ansicht der zweiten Kurvenscheibe mit der zweiten Steuerkurve freigibt,

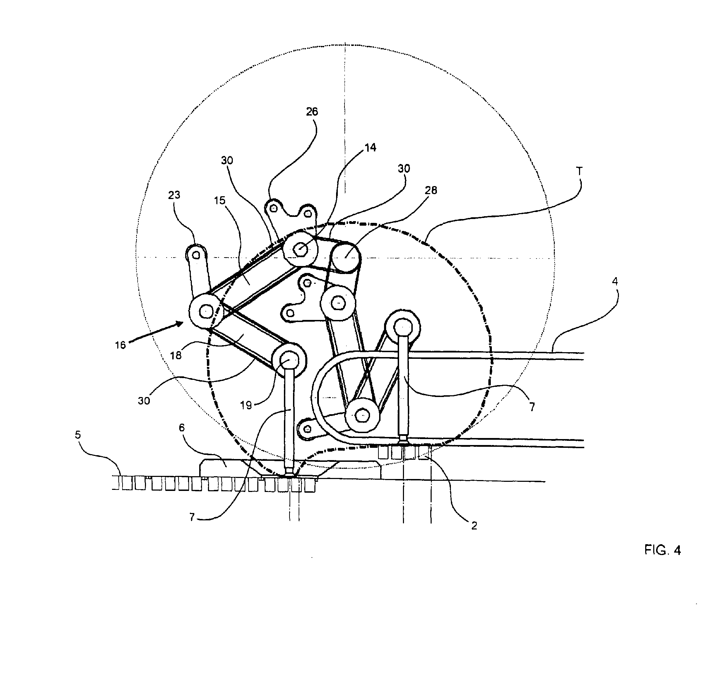

- Fig. 4: in einer Seitenansicht eine schematische Darstellung der sich durch die erste Steuerkurve und die zweite Steuerkurve ergebende Trajektorie der beiden dargestellten Greifelemente,
- Fig. 5: eine gemeinsame Darstellung der ersten Steuerkurve und der zweiten Steuerkurve zusammen mit der sich aus deren Gestaltung ergebenden Trajektorie des Greifelementes; mit dem Greifelement in der Stellung beim Ergreifen der Packung in der Stanze,
- Fig. 6: eine der Fig. 5 entsprechende Darstellung während der Phase des Transportes der nicht dargestellten Packung mit dem Greifelement von der Zuführung zu der Fördereinrichtung,
- Fig. 7: eine der Fig. 5 entsprechende Darstellung während der Phase der Übergabe der Packung von dem Greifelement an die Fördereinrichtung,
- Fig. 8: eine der Fig. 5 entsprechende Darstellung während des Rücklaufes des Greifelementes von der Fördereinrichtung zu der Zuführung,
- Fig. 9: eine der Fig. 5 entsprechende Darstellung zu einem gegenüber Fig. 8 späteren Zeitpunkt eines Umlaufes,
- Fig. 10: eine der Fig. 5 entsprechende Darstellung zu einem gegenüber Fig. 9 nochmals späteren Zeitpunkt eines Umlaufes des Greifelementes, und
- Fig. 11 bis 13: schematische Darstellungen zur Veranschaulichung der Abhängigkeit der Winkelgeschwindigkeit der Antriebsscheibe in einem Stanz- und Übergabetakt von der Ausdehnung der Packung in Förderrichtung, dargestellt in den Graphen mit der Winkelgeschwindigkeit auf der Ordinate und dem Referenzwinkel auf der Abzisse.

In der Zeichnung ist eine Vorrichtung 1 dargestellt, die zum Übergeben von Packungen 2 von einer Zuführung 3 an eine Fördereinrichtung 4 dient, wozu die mit der Zuführung 3 in einem Band 5 einer Stanze 6 zugeführte Packung 2 in der Stanze 6 ausgestanzt und mit einem Greifelement 7 ergriffen wird, das als Sauggreifer 8 gestaltet ist, wobei insgesamt pro Greifelement 7 in dem in der Zeichnung dargestellten Ausführungsbeispiel drei als Saugerkamm 9 gestaltete Sauger 11 vorgesehen sind. Die mit dem Greifelement 7 ergriffene Packung 2 wird der als Saugförderer ausgeführten Fördereinrichtung 4 zugeführt, die mehrere mit gegenseitigem Abstand angeordnete Saugbänder 10 aufweist, zwischen die die Sauger 11 des Saugerkamms 9 reichen. Die Zuführung 3 fördert die Packungen 2 mit konstanter Geschwindigkeit V1 heran, während die Fördereinrichtung 4 die Packungen 2 mit konstanter, aber höherer Geschwindigkeit V2 abtransportiert. Um die Packung 2 synchronisiert mit der Zuführung 3 ergreifen und kontrolliert und synchronisiert an die Fördereinrichtung 4 übergeben zu können, ist eine Antriebseinrichtung 12 mit einem geregelten Servoantrieb vorgesehen, durch die eine Antriebsscheibe 13 drehend antreibbar ist, in der dezentral eine Antriebswelle 14 drehbar gelagert ist, auf der mit einem ersten Hebelarm 15 ein Kniehebel 16 drehfest angeordnet ist. Der Kniehebel 16 weist einen über ein Kniegelenk 17 mit dem ersten Hebelarm 15 verbundenen zweiten Hebelarm 18 auf, an dessen freien Ende eine Greiferwelle 19 drehbar gelagert ist, die das Greifelement 7 trägt. Weiterhin sind Mittel vorgesehen zur Steuerung des von dem ersten Hebelarm 15 und dem zweiten Hebelarm 18 eingeschlossenen Öffnungswinkels sowie Mittel zur Steuerung der Drehlage des Greifelements 7 relativ zum Kniehebel 17.

Die Mittel zur Steuerung des Öffnungswinkels weisen eine erste Kurvenscheibe 20 mit einer ersten Steuerkurve 21 auf, an der eine der Gelenkwelle 22 des Kniegelenks 17 zugeordnete erste Kurvenrolle 23 abläuft. Der zweite Hebelarm 18 ist drehfest mit der Gelenkwelle 22 verbunden. Weiterhin ist eine zweite Kurvenscheibe 24 mit einer zweiten Steuerkurve 25 vorhanden, an der eine der Antriebswelle 14 zugeordnete zweite Kurvenrolle 26 abläuft, wobei die zweite Steuerkurve 25 als auf der zweiten Kurvenscheibe 24 angeordnete Kurvenleiste 27 ausgebildet ist, so daß die zweifach vorgesehene zweite Kurvenrolle 26 an den beiden Seitenflächen der Kurvenleisten 27 ablaufen kann. Die erste Kurvenscheibe 20 und die zweite Kurvenscheibe 20 sind auf gegenüberliegenden Seiten der Antriebsscheibe 13 angeordnet, wozu die Antriebswelle 14 die Antriebsscheibe 13 durchgreift und auf der dem Greifelement 7 abgewandten Seite die zweite Kurvenrolle 26 trägt.

Die Mittel zur Steuerung der Drehlage weisen eine koaxial zur Antriebsscheibe 13 angeordnete starre Achse 28 auf, wobei auf der Antriebswelle 14 der Gelenkwelle 22 und der Greiferwelle 19 drehbar Steuerrollen 29 gelagert sind, die über Antriebsriemen 30 miteinander und mit der starren Achse 28 gekoppelt sind.

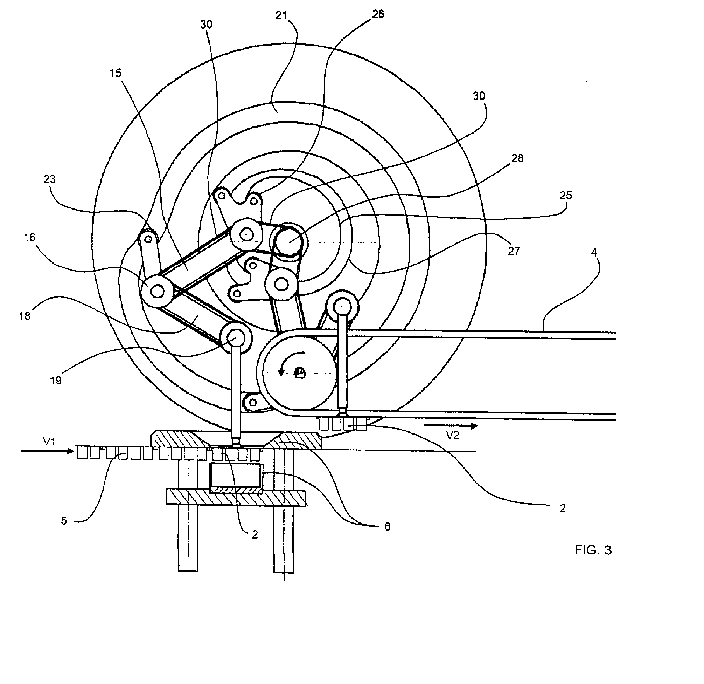

Die erste Steuerkurve 21 und die zweite Steuerkurve 25 sind enstprechend der Darstellung in Fig. 3 so gestaltet, daß das Greifelement 7 nach dem Ergreifen der Packung 2 und deren Ausstanzung mittels der Stanze 6 eine im wesentlichen senkrecht zur Stanze 6 erfolgende Hubbewegung ausführt und die Packung 2, nachdem das Ergreifen mit der Zuführung 3 synchronisiert erfolgt ist, mit der Fördereinrichtung 4 auf die Geschwindigkeit V2 synchronisiert und an diese abgegeben wird.

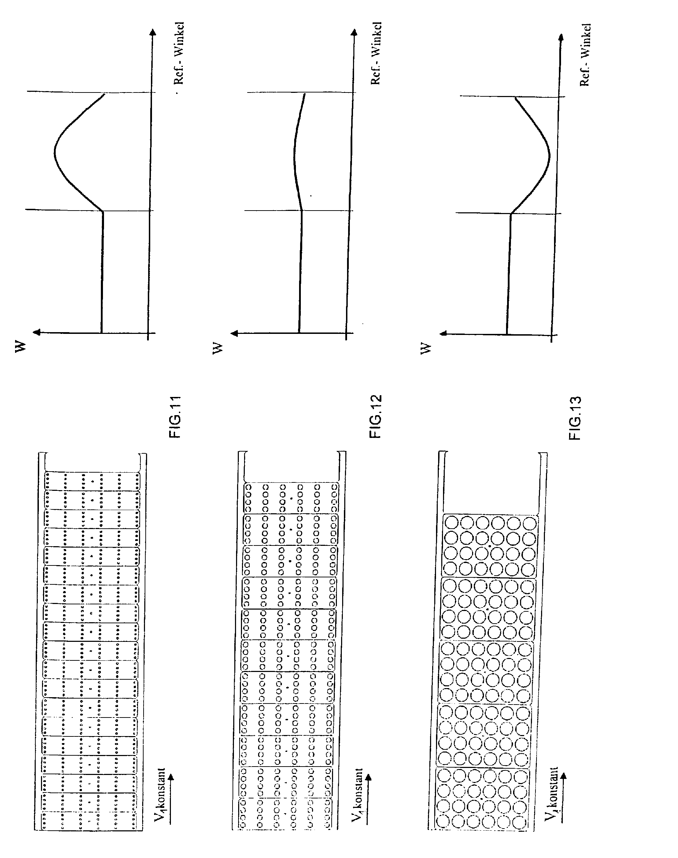

In dem Ausführungsbeispiel ist die Erfindung im Zusammenhang mit dem Ausstanzen von Blisterpackungen aus einem Folienband gezeigt. Aus Kostengründen und zur Vermeidung von Abfall erfolgt das Stanzen abfallarm, d.h. mit direkt nebeneinander angeordneten Blisterpackungen. Da die Zuführung die Packungen 2 mit konstanter Geschwindigkeit V1 heranfördert, ist die Anzahl der pro Zeiteinheit erforderlichen Stanz- und Übergabetakte abhängig von der Ausdehnung der Packungen 2 in Förderrichtung, also von der Stanzmaßbreite. Die Fig. 11 bis 13 zeigen die mittels des regelbaren Servoantriebs durchzuführenden Anpassungen, die mittels einer Variation der Winkelgeschwindigkeit der Antriebsscheibe erreicht werden. Innerhalb eines Stanz- und Übergabetaktes dreht die Antriebswelle 14 beim dem Stanzen und Ergreifen sowie beim Übergeben mit konstanter, an die Geschwindigkeiten V1 und V2 angepaßter Geschwindigkeit, während dazwischen die Winkelgeschwindigkeit in Abhängigkeit der Blisterbreite erhöht oder verringert wird. Zu beachten ist, daß bedingt durch die Form der ersten Steuerkurve 21 und der zweiten Steuerkurve 25, sich während der Phase konstanter Winkelgeschwindigkeit ein Greifelement 7 parallel und synchron zur Zuführung 3 bewegt, während ein zweites Greifelement 7 parallel und sychron zur Fördereinrichtung 4 bewegt wird.

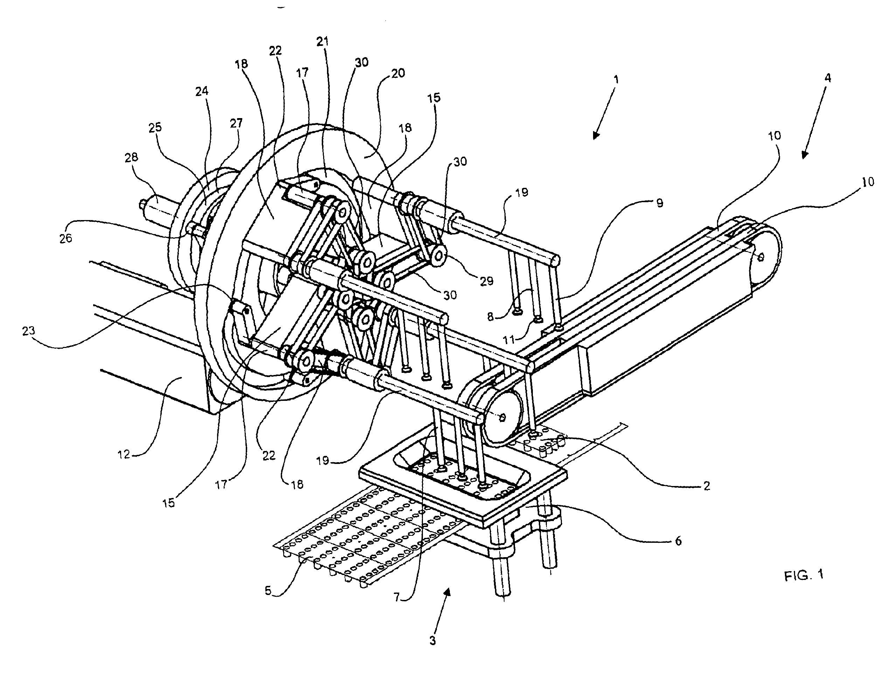

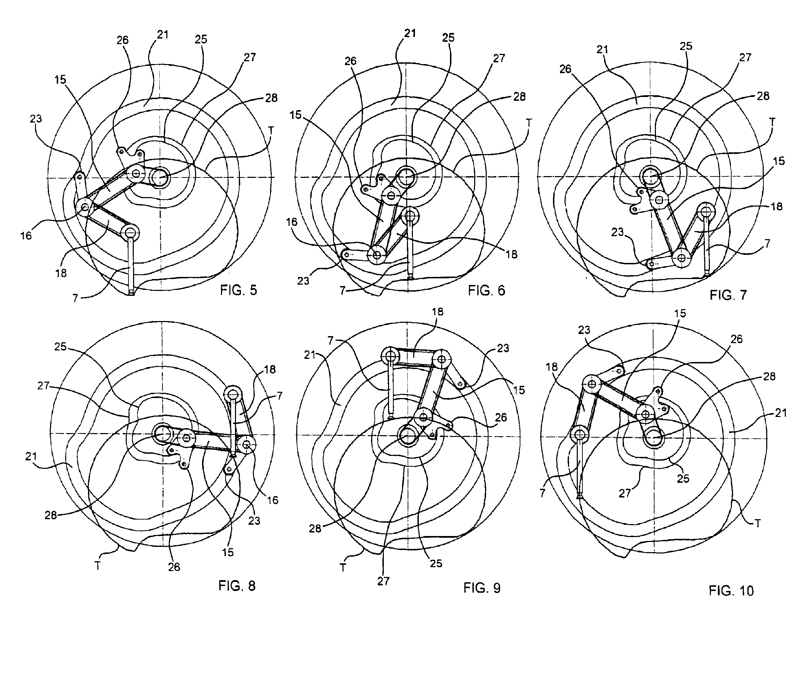

Im folgenden wird, insbesondere unter Verweis auf die Figuren 5 bis 10 der Betrieb der Vorrichtung 1 geschildert, wobei die Figuren 5 bis 10 die Antriebswelle 14, den Kniehebel 16 mit dem Greifelement 7, die erste Kurvenrolle 23 und die zweite Kurvenrolle 26 einfach dargestellt sind; zur Leistungssteigerung der Vorrichtung 1 können diese Bauteile allerdings auch mehrfach in einer gleichmäßig über den Umfang der Antriebsscheibe 13 verteilten Anordnung, wie aus der Fig. 1 ersichtlich, vorgesehen sein.

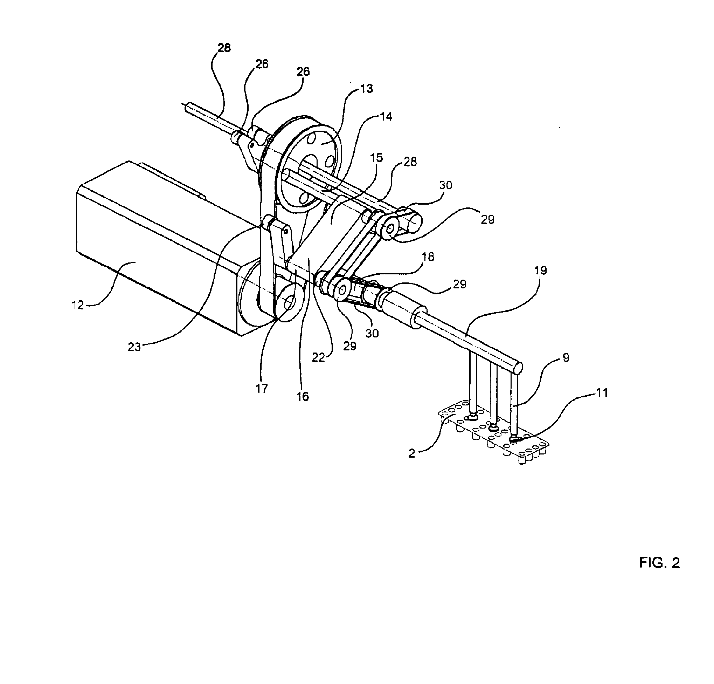

Fig. 5 zeigt den Beginn des Übergabevorganges, bei dem die Packung 2 von dem Greifelement 7 angesaugt und mittels der Stanze 6 ausgestanzt wird. Um eine Kollision der Packung 2 mit der Stanze 6 zu vermeiden, sind die erste Steuerkurve 21 und die zweite Steuerkurve 25 so geformt, daß entsprechend der dargestellten Trajektorie T das Greifelement 7 eine steile Hubbewegung ausführt, um nachfolgend im wesentlichen parallel zur Förderrichtung bewegt zu werden (Fig. 6). Fig. 7 zeigt die Phase eines Umlaufes, bei der die Übergabe der Packung 2 an die Fördereinrichtung 4 erfolgt, wozu nachfolgend das Greifelement 7 erneut steil angehoben und damit die Packung 2 an den Saugbändern 10 abgestreift wird. Die Figuren 8 bis 10 zeigen die weitere Bewegung des Greifelementes 7 bei seinem Umlauf zurück zu der Ausgangsposition in Fig. 5, wobei die Figuren 5 bis 10 die Wirkung aufgrund des Zusammenspiels der einzelnen Bauteile der Vorrichtung 1 zeigen, deren isolierte Bewegung anhand der Fig. 2 erläutert wird.

Durch die Antriebseinrichtung 12 wird die Antriebsscheibe 13 in gleichmäßige Drehung versetzt, die insgesamt vier Aufnahmen für die Antriebswelle 14 aufweist, die dezentral zur Antriebsachse der Antriebsscheibe 13 positioniert ist, also bei einer Drehung der Antriebsscheibe 13 auf einer Kreisbahn um deren Achse umläuft. Dieser Drehbewegung auf der Kreisbahn wird über die zweite Kurvenrolle 26 in Zusammenwirken mit der zweiten Steuerkurve 25 eine Eigendrehung der Antriebswelle 14 um ihre Achse überlagert, durch die der erste Hebelarm 15 des Kniehebels 16 verschwenkt wird. Durch die erste Kurvenrolle 23 und die erste Steuerkurve 21 wird eine Eigendrehung der Gelenkwelle 22 beeinflusst und damit der zweite Hebelarm 18 des Kniehebels 16 verschwenkt, so daß damit auf einfache Weise durch die Formgebung der ersten Steuerkurve 21 und der zweiten Steuerkurve 25 der Öffnungswinkel des Kniehebels 16 und die Stellung des ersten Hebelarmes 15 und des zweiten Hebelarmes 18 gesteuert werden kann. Damit bei einem Umlauf der Antriebswelle 14 mit der Antriebsscheibe 13 und der Drehung der Antriebswelle 14 sowie der Gelenkwelle 22 das Greifelement 7 stets senkrecht nach unten weist, wird durch die starre Achse 28, die über die Antriebsriemen 30 mit der Greiferwelle 19 gekoppelt ist, die erforderliche Drehung erzeugt.

## Patentansprüche

1. Vorrichtung zum Übergeben von Packungen (2), mit einem die Packungen (2) von einer Zuführung (3) ergreifenden und an eine Fördereinrichtung (4) übergebenden Greifelement (7), **dadurch gekennzeichnet, daß** mittels einer Antriebseinrichtung (12) eine Antriebsscheibe (13) drehend antreibbar ist, in der dezentral eine Antriebswelle (14) drehbar gelagert ist, auf der mit einem ersten Hebelarm (15) ein Kniehebel (16) drehfest angeordnet ist, der einen über ein Kniegelenk (17) mit dem ersten Hebelarm (15) verbundenen zweiten Hebelarm (18) aufweist, an dessen freien Ende eine Greiferwelle (19) drehbar gelagert ist, die das Greifelement (7) trägt, und daß Mittel vorgesehen sind zur Steuerung des von dem ersten Hebelarm (15) und dem zweiten Hebelarm (18) eingeschlossenen Öffnungswinkels sowie Mittel zur Steuerung der Drehlage des Greifelements (7) relativ zum Kniehebel (16).

2. Vorrichtung nach Anspruch 1, **dadurch gekennzeichnet, daß** die Mittel zur Steuerung des Öffnungswinkels eine erste Kurvenscheibe (20) mit einer ersten Steuerkurve (21) aufweisen, an der eine der Gelenkwelle (22) des Kniegelenks (17) zugeordnete erste Kurvenrolle (23) abläuft.

3. Vorrichtung nach Anspruch 2, **dadurch gekennzeichnet, daß** der zweite Hebelarm (18) drehfest mit der Gelenkwelle (22) verbunden ist.

4. Vorrichtung nach einem der Ansprüche 1 bis 3, **dadurch gekennzeichnet, daß** die Mittel zur Steuerung des Öffnungswinkels eine zweite Kurvenscheibe (24) mit einer zweiten Steuerkurve (25) aufweisen, an der eine der Antriebswelle (14) zugeordnete zweite Kurvenrolle (26) abläuft.

5. Vorrichtung nach Anspruch 4, **dadurch gekennzeichnet, daß** die zweite Steuerkurve (25) als auf der zweiten Kurvenscheibe (24) angeordnete Kurvenleiste (27) gebildet ist, daß die zweite Kurvenrolle (26) zweifach vorgesehen ist, und daß die beiden zweiten Kurvenrollen (26) an den beiden Seitenflächen der Kurvenleiste (27) ablaufen.

6. Vorrichtung nach Anspruch 4 oder 5, **dadurch gekennzeichnet, daß** die erste Kurvenscheibe (20) und die zweite Kurvenscheibe (24) auf gegenüberliegenden Seiten der Antriebsscheibe (13) angeordnet sind.

7. Vorrichtung nach Anspruch 6, **dadurch gekennzeichnet, daß** die Antriebswelle (14) die Antriebsscheibe (13) durchgreift und auf der dem Greifelement (7) abgewandten Seite die zweite Kurvenrolle (26) trägt.

8. Vorrichtung nach einem der Ansprüche 1 bis 7, **dadurch gekennzeichnet, daß** die Mittel zur Steuerung der Drehlage eine koaxial zur Antriebsscheibe angeordnete starre Achse aufweisen, und daß auf der Antriebswelle (14), der Gelenkwelle und der Greiferwelle drehbar Steuerrollen gelagert sind, die über Antriebsriemen miteinander und mit der starren Achse gekoppelt sind.

9. Vorrichtung nach einem der Ansprüche 1 bis 8, **dadurch gekennzeichnet, daß** das Greifelement (7) als Sauggreifer (8) mit einem Sauger (11) gestaltet ist.

10. Vorrichtung nach Anspruch 9, **dadurch gekennzeichnet, daß** der Sauger (11) mehrfach vorgesehen und als Saugerkamm (9) gestaltet ist.

11. Vorrichtung nach einem der Ansprüche 1 bis 10, **dadurch gekennzeichnet, daß** die Fördereinrichtung (4) als Saugförderer ausgeführt ist mit mehreren mit gegenseitigem Abstand angeordneten Saugbändern (10).

12. Vorrichtung nach einem der Ansprüche 1 bis 11, **dadurch gekennzeichnet, daß** die Antriebswelle (14) mit dem Kniehebel (16) und der Greiferwelle (19) mehrfach, gleichmäßig über den Umfang der Antriebsscheibe (13) verteilt, vorgesehen ist.

13. Vorrichtung nach einem der Ansprüche 1 bis 12, **dadurch gekennzeichnet, daß** die Antriebseinrichtung (12) einen geregelten Servoantrieb aufweist.

14. Vorrichtung nach einem der Ansprüche 1 bis 13, **dadurch gekennzeichnet, daß** die Zuführung (3) eine Stanze (6) zum Ausstanzen der Packungen (2) aus einem umlaufenden Band (5) aufweist und das Greifelement (7) zum Ergreifen der Packung (2) während des Stanzvorganges synchronisiert ist.

15. Vorrichtung nach Anspruch 14, **dadurch gekennzeichnet, daß** die erste Steuerkurve (21) und die zweite Steuerkurve (25) so gestaltet sind, daß das Greifelement (7) nach dem Ergreifen der Packung (2) und deren Ausstanzung mittels der Stanze (6) eine im wesentlichen senkrecht zur Stanze (6) erfolgende Hubbewegung ausführt.

16. Vorrichtung nach einem der Ansprüche 4 bis 15, **dadurch gekennzeichnet, daß** die erste Steuerkurve (21) und die zweite Steuerkurve (25) so gestaltet sind, daß die Packung (2) nach dem mit der Zuführung (3) synchronisierten Ergreifen mit der Fördereinrichtung (4) synchronisiert und an diese abgegeben wird.

17. Vorrichtung nach einem der Ansprüche 14, bis 16, **dadurch gekennzeichnet, daß** durch den regelbaren Servoantrieb die Winkelgeschwindigkeit der Antriebsscheibe (13) innerhalb eines Stanz- und Übergabetaktes zur Anpassung an die Ausdehnung der Packung (2) in Förderrichtung veränderbar ist.

18. Vorrichtung nach einem der Ansprüche 2 bis 17, **dadurch gekennzeichnet, daß** die erste Steuerkurve (21) einen Verlauf entsprechend der Darstellung in Fig. 3 aufweist.

19. Vorrichtung nach einem der Ansprüche 4 bis 18, **dadurch gekennzeichnet, daß** die zweite Steuerkurve (25) einen Verlauf entsprechend der Darstellung in Fig. 3 aufweist.
